# EUROPEAN PATENT APPLICATION

(11) **EP 4 373 202 A1**
(43) Date of publication of application: **22.05.2024**
(21) Application number: 23210319.2
(22) Date of filing: 16.11.2023
(51) Int. Cl.: H04W 74/0816

(54) **LINK PROTECTION USING RTS/CTS IN ENHANCED LONG RANGE (ELR) COMMUNICATION**

(30) Priority: 17.11.2022 US 202263384109 P; 15.11.2023 US 202318509559
(71) Applicant: MediaTek Inc., 30078 Hsinchu City (TW)
(72) Inventor: CHEN, You-Wei, San Jose, 95134 (US); LIU, Jianhan, San Jose, 95134 (US); LU, Kai Ying, San Jose, 95134 (US); FENG, Shuling, San Jose, 95134 (US); WU, Tsung-Hsuan, 30078 Hsinchu City (TW); PARE, Jr., Thomas Edward, San Jose, 95134 (US)
(74) Representative: Hoefer & Partner Patentanwälte mbB

(57) **Abstract**

In an aspect of the disclosure, a method, a computer-readable medium, and an apparatus are provided. The apparatus may be a station, STA. In certain configurations, the STA transmits a request-to-send, RTS, frame in an enhanced long range, ELR, format for obtaining a transmission opportunity, TXOP, (1620). The STA receives a first clear-to-send, CTS, frame in the ELR format or a non-ELR format responding to the RTS frame (1630). In response to receiving the first CTS frame, the STA transmits data in the ELR format in the TXOP (1640). In certain configurations, the STA further receives an acknowledgement in the same format as the first CTS frame for responding to the data being transmitted (1650). In certain configurations, prior to transmitting the RTS frame, the STA transmits a CTS-to-Self frame in the non-ELR format (1610).

## Description

### CROSS-REFERENCE TO RELATED APPLICATION(S)

This application claims the benefits of U.S. Provisional Application Serial No. 63/384,109, entitled "LINK PROTECTION USING RTS/CTS IN ENHANCED LONG RANGE (ELR) COMMUNICATION" and filed on November 17, 2022, which is expressly incorporated by reference herein in their entirety.

### BACKGROUND

### Field

The present disclosure relates generally to communication systems, and more particularly, to techniques of methods and apparatuses about a link protection mechanism using request-to-send (RTS)/clear-to-send (CTS) in enhanced long range (ELR) transmission.

### Background

The statements in this section merely provide background information related to the present disclosure and may not constitute prior art.

Wi-Fi with success ecosystem globally, has currently more than 20 billion connected devices to support high-speed and high-efficient wireless service, as well as highreliable and cost-sensitive Internet of Things (IoT) devices. The massive deployed IoT device using 802.1 1b provides the largest coverage but suffers from limit spectral efficiency and forward compatibility issue. Using high-efficiency (HE) Extended Range (ER) single user (SU) physical layer protocol data unit (PPDU) can extend the link distance by 3dB. However, due to the imbalanced 6dB transmitted power of access point (AP) and non-AP station (STA), the benefit of employing HE ER SU PPDU is typically limited by uplink and still cannot meet the market needs.

### SUMMARY

The following presents a simplified summary of one or more aspects in order to provide a basic understanding of such aspects. This summary is not an extensive overview of all contemplated aspects, and is intended to neither identify key or critical elements of all aspects nor delineate the scope of any or all aspects. Its sole purpose is to present some concepts of one or more aspects in a simplified form as a prelude to the more detailed description that is presented later. Methods and an apparatus according to the invention are defined in the independent claims. The dependent claims define preferred embodiments thereof.

In an aspect of the disclosure, a method, a computer-readable medium, and an apparatus are provided. The apparatus may be a station (STA). In certain configurations, the STA transmits a request-to-send (RTS) frame in an enhanced long range (ELR) format for obtaining a transmission opportunity (TXOP). The STA receives a first clear-to-send (CTS) frame in the ELR format or a non-ELR format responding to the RTS frame. In response to receiving the first CTS frame, the STA transmits data in the ELR format in the TXOP.

In certain configurations, the STA further receives an acknowledgement in the same format as the first CTS frame for responding to the data being transmitted.

In certain configurations, prior to transmitting the RTS frame, the STA transmits a CTS-to-Self frame in the non-ELR format.

In certain configurations, in response to receiving the first CTS frame, the STA waits for a period. The STA receives a second CTS frame in the period. One of the first CTS frame and the second CTS frame is in the ELR format, and the other of the first CTS frame and the second CTS frame is in the non-ELR format. The data is transmitted after the period.

In certain configurations, in response to not receiving any CTS frame or completely transmitting the data in the ELR format in an estimated transmission period, the STA transmits a single CF-end frame or dual CF-end frames to terminate the TXOP.

In another aspect of the disclosure, a method, a computer-readable medium, and an apparatus are provided. The apparatus may be a STA. In certain configurations, the STA receives a RTS frame in an ELR format or a non-ELR format. The STA transmits a single CTS frame or dual CTS frames responding to the RTS frame on the channel. The dual CTS frames include a first CTS frame in the ELR format and a second CTS frame in the non-ELR format. The STA receives data on the channel. In response to receiving the data, the STA transmits an acknowledgement responding to the data on the channel. The acknowledgement is in the same format as the single CTS frame or the first CTS frame of the dual CTS frames responding to the RTS frame.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a diagram illustrating an example network environment.
FIG. 2 is a diagram illustrating an example design of an ELR PPDU structure.
FIG. 3 is a diagram illustrating examples of using MU-RTS and CTS to trigger OFDMA in existing Wi-Fi standard and with CTS separation for new control frame delivery.
FIG. 4 is a diagram illustrating an example procedure of ELR-RTS/CTS transmission by a STA.
FIG. 5 is a diagram illustrating an example procedure of the data transmission by two STAs in FIG. 4.
FIG. 6 is a diagram illustrating an example procedure of the RTS/CTS transmission by two STAs in FIG. 4.
FIG. 7 is a diagram illustrating an example procedure of ELR-RTS/CTS transmission by a STA with link protection allowing the OBSS legacy STA to set the NAV.
FIG. 8 is a diagram illustrating an example procedure of the RTS/CTS transmission by two STAs in FIG. 7.
FIG. 9 is a diagram illustrating an example procedure of ELR-RTS/CTS transmission by a STA with full link protection.
FIG. 10 is a diagram illustrating an example procedure of the RTS/CTS transmission by two STAs in FIG. 9.
FIG. 11 is a diagram illustrating an example procedure of ELR-RTS/CTS transmission by an ELR STA with link protection.
FIG. 12 is a diagram illustrating an example procedure of the RTS/CTS transmission by the AP and the ELR STA in FIG. 11.
FIG. 13 is a diagram illustrating an example procedure of RTS/CTS transmission by an ELR STA with link protection with a legacy AP.
FIG. 14 is a diagram illustrating an example procedure of the RTS/CTS transmission by the AP and the ELR STA in FIG. 13.
FIG. 15 is a diagram illustrating an example communication system.
FIG. 16 is a flow chart of a method (process) for wireless communication of a STA.
FIG. 17 is a flow chart of a method (process) for wireless communication of a STA.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

Several aspects of telecommunications systems will now be presented with reference to various apparatus and methods. These apparatus and methods will be described in the following detailed description and illustrated in the accompanying drawings by various blocks, components, circuits, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented as a "processing system" that includes one or more processors. Examples of processors include microprocessors, microcontrollers, graphics processing units (GPUs), central processing units (CPUs), application processors, digital signal processors (DSPs), reduced instruction set computing (RISC) processors, systems on a chip (SoC), baseband processors, field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software components, applications, software applications, software packages, routines, subroutines, objects, executables, threads of execution, procedures, functions, etc., whether referred to as software, firmware, middleware, microcode, hardware description language, or otherwise.

Accordingly, in one or more example aspects, the functions described may be implemented in hardware, software, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), optical disk storage, magnetic disk storage, other magnetic storage devices, combinations of the aforementioned types of computer-readable media, or any other medium that can be used to store computer executable code in the form of instructions or data structures that can be accessed by a computer.

As discussed, using HE ER SU PPDU can extend the link distance by 3dB. However, due to the imbalanced 6dB transmitted power of AP and non-AP STA, the benefit of employing HE ER SU PPDU is typically limited by uplink and still cannot meet the market needs. In this case, a scheme of the Enhanced Long Range (ELR) communication with a further range extension of both downlink and uplink were proposed.

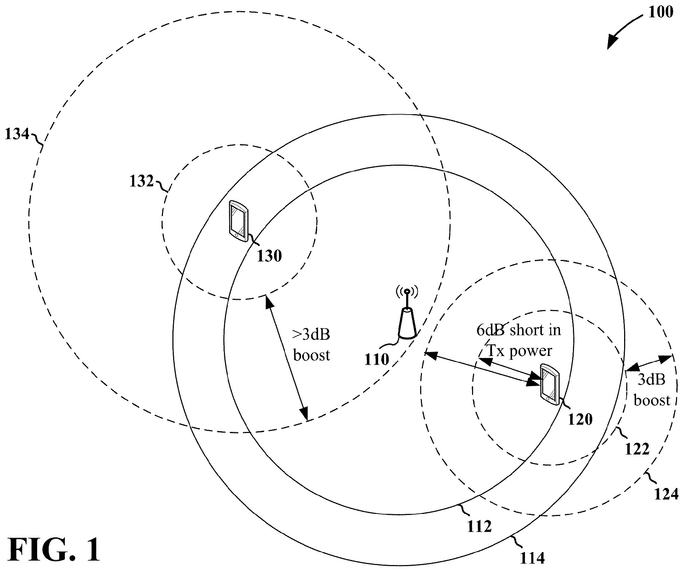

FIG. 1 is a diagram illustrating an example network environment 100. The network environment 100 may involve an AP 110 and multiple non-AP STAs communicating wirelessly with each other in accordance with the IEEE 802.11 standards. The AP 110 has a non-high-throughput (non-HT) coverage range 112 and an ELR coverage range 114. The non-AP STAs include an ER STA 120, which is a non-AP STA supporting ER but not supporting ELR, and an ELR STA 130, which is a non-AP STA supporting ELR. The ER STA 120 has a corresponding non-HT coverage range 122 and an ER coverage range 124, and the ELR STA 130 has a corresponding non-HT coverage range 132 and an ELR coverage range 134. As shown in FIG. 1, the ER STA 120 is located within the non-HT coverage range 112 of the AP 110, and the ELR STA 130 is located within the ELR coverage range 114 of the AP 120 but outside the non-HT coverage range 112 of the AP 110. The AP 110 is located within the ELR coverage range 134 of the ELR STA 130, but outside the ER coverage range 124 of the ER STA 120. In certain configurations, it is possible that the network environment 100 may include one or more additional non-AP STAs, and each of the additional non-AP STAs may be an ER STA (i.e., a non-AP STA supporting ER), an ELR STA (i.e., a non-AP STA supporting ELR), or a non-AP STA supporting both ELR and ER.

Specifically, due to the imbalanced 6dB transmitted power of the AP and non-AP STA, the ER PPDU for the ER STA 120 is only beneficial to uplink transmission. Further, it should be noted that the non-AP using ER PPDU (e.g., the ER STA 120) may still fail to connect to the AP 110 due to the AP 110 being located outside the ER coverage range 124 of the ER STA 120 as shown in FIG. 1. Further, the ELR STA 130 as shown in FIG. 1, which is located outside the non-HT coverage range 112 of the AP 110, cannot receive legacy preamble (e.g., L-STF/LTF/SIG) for both downlink and uplink communication. Thus, in the proposed scheme of the ELR communication with the further range extension of both downlink and uplink, new ELR waveforms were proposed with a significant improved link distance.

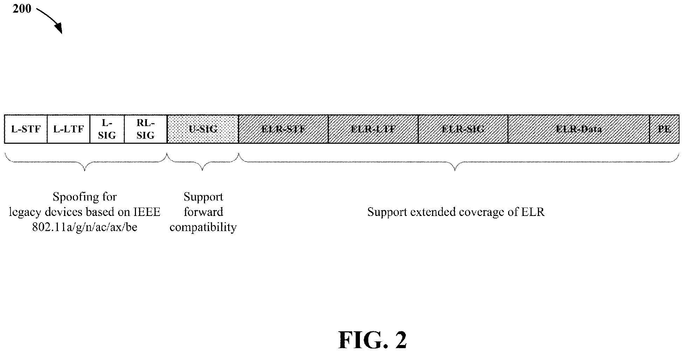

FIG. 2 is a diagram illustrating an example design of an ELR PPDU structure 200. Typically, the legacy preamble of a PPDU includes the short training field (STF), long training field (LTF) and signal (SIG) fields, and the ELR PPDU structure 200 employs the legacy preamble such as the L-STF, L-LTF, L-SIG fields and a repeated legacy SIG (RL-SIG) field for spoofing IEEE 802.11a/g/n/ac/ax/be-based devices. Further, the ELR PPDU structure 200 employs one or more universal SIG (U-SIG) fields, applied right after the legacy preamble fields for forward compatibility purposes and for providing ELR PPDU information in the upcoming Wi-Fi standard(s). Information of the ELR PPDU that may be provided in the U-SIG fields may include, without being limited to, physical-layer (PHY) version, PPDU type, bandwidth, transmission direction, basic service set (BSS) color, and transmission opportunity (TXOP). Thus, in the ELR PPDU structure 200, backward compatibility may be achieved by the legacy preamble fields (i.e., the L-STF/LTF/SIG and the RL-SIG fields) for spoofing, and forward compatibility may be achieved by the U-SIG field. Power boosting may be applied for spoofing as well as the U-SIG portions to provide an enhanced spoofing range. Moreover, after the U-SIG field(s), the ELR PPDU structure 200 may employ new designed ELR-STF/LTF/SIG/Data fields for ELR applications to provide a significant improvement in term of transmission distance as compared to the IEEE 802.11a/b/g/n/ac/ax/be-based legacy devices.

In certain configurations, the ELR PPDU structure 200 is expected to support orthogonal frequency-division multiple access (OFDMA), which is a multi-user version of the popular orthogonal frequency-division multiplexing (OFDM) digital modulation scheme. Further, in the ELR PPDU structure 200, the ELR-STF/LTF fields may achieve reasonable low peak-to-average power ratio (PAPR) for higher power boosting than the IEEE 802.11a/b/g/n/ac/ax/be-based devices. The ELR-SIG/Data fields may leverage the receiving sensitivity and data rate to provide a significant enhancement in coverage. The ELR-STF/LTF/SIG/Data fields may support 20 MHz or lower bandwidth.

Further, on top of the ELR PPDU structure 200 and the power imbalance of the AP 110 and the non-AP STAs (e.g., the ER STA 120 and the ELR STA 130), link protections of downlink and uplink communications for ELR and coexistence with the STAs without ELR capability (e.g., STAs not supporting ELR PPDU) are important. Specifically, link protection using request-to-send (RTS) and clear-to-send (CTS) frames are optional in IEEE 802.11, since the RTS and CTS frames are carried by the legacy format (802.11a) with the lowest data rate of 6 Mbps and they achieve lower spectral efficiency than the regular traffic. The benefits of RTS/CTS need to be leveraged. Firstly, in the heavily-loaded and range-extend Wi-Fi network, high collision may lead to data re-transmission and consume valuable airtime/frequency resource. In this case, RTS and CTS are desired to reduce the collision and benefit to resource unit utilization. However, the legacy RTS and CTS cannot support ELR users well and thus an enhanced RTS and CTS mechanism is needed. Further, OFMDA can improve the resource unit utilization. Therefore, in the new designed multi-user (MU)-RTS and CTS mechanism, it is desirable to support OFDMA and ELR at the same time.

Since RTS/CTS and ELR may be optional features in the upcoming standard, one aspect of the present disclosure relates to a link protection mechanism using RTS/CTS via the ELR PPDU, in order to meet the ELR transmission in different considerations.

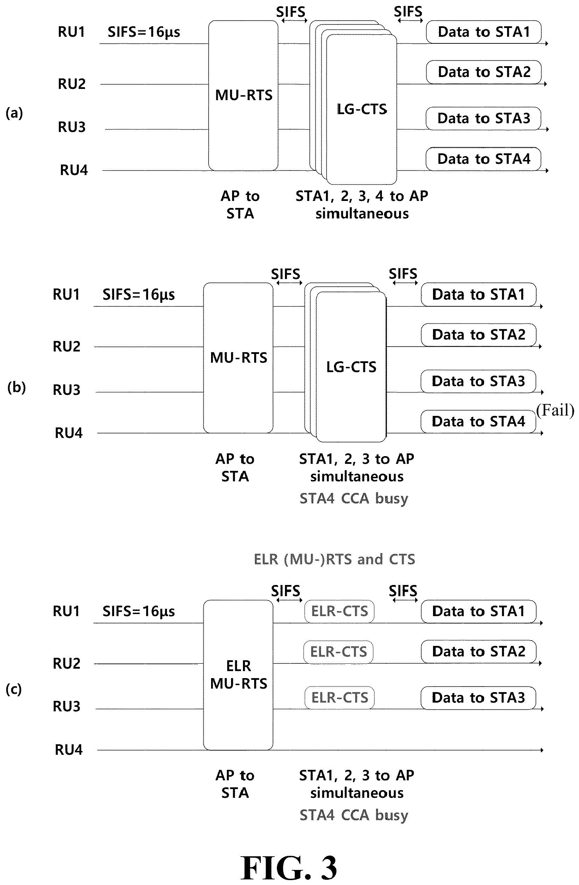

To support OFDMA with similar behavior for multiple clients, MU-RTS and CTS are employed in the current Wi-Fi standard. FIG. 3 is a diagram illustrating examples of using MU-RTS and CTS to trigger OFDMA in existing Wi-Fi standard and with CTS separation for new control frame delivery. As shown in FIG. 3(a), when the AP 110 sends a legacy MU-RTS frame (i.e., MU-RTS carried by the legacy PPDU structure and not by the ELR PPDU structure 300) to multiple STAs (which may be the non-AP STAs such as the ER STA 120 and the ELR STA 130) within the AP coverage on a channel, the legacy MU-RTS frame may trigger legacy CTS (i.e., CTS carried by the legacy PPDU structure and not by the ELR PPDU structure 300) transmission from one or multiple STAs, including STA1 to STA4. However, it is possible that multiple STAs (i.e., STA1 to STA4) may transmit legacy CTS frames (with the same format and time duration) simultaneously back to the AP 110, such that the AP 110 may not be able to separate the corresponding sources of the legacy CTS frames received from the STAs. For example, as shown in FIG. 3(b), if one of the STAs (e.g., STA4) is busy under the clear channel assessment (CCA) mechanism, the STA4 does not transmit the legacy CTS frame to the AP 110, and the AP 110 receives only three legacy CTS frames from the other three STAs (i.e., STA1, STA2 and STA3). However, the AP 110 may not be able to identify the corresponding source STAs (i.e., STA1, STA2 and STA3) of the legacy CTS frames received. Thus, the AP 110 may still attempt to transmit data to the STA4, which is CCA busy, and the data being transmitted to the STA4 will fail at the receiver end. This issue is not resolved under the legacy PPDU format as it is limited by the backward compatibility and the airtime utilization efficiency.

In comparison, in order to reach the ELR STAs (e.g., the ELR STA 130) outside the non-HT coverage range 112 of the AP 110, the new designed ELR PPDU structure 300 may be utilized. However, the ELR PPDU structure 300 is not understandable by the legacy devices (e.g., the ER STA 120). Thus, new control frame delivery may be designed. Specifically, CTS separation may be supported to allow the AP 110 to understand the true channel conditions, in which non-overlapping resource unit (RU)-based CTS or orthogonally encoded CTS for ELR may be potential candidates. As shown in FIG. 3(c), when the AP 110 sends an ELR MU-RTS frame (i.e., MU-RTS carried by the ELR PPDU structure 300) to multiple STAs, the ELR MU-RTS frame may trigger ELR-CTS (i.e., CTS carried by the ELR PPDU structure 300) transmission from one or multiple STAs. Thus, the responding STAs (including STA1, STA2 and STA3) may transmit corresponding ELR-CTS frames in the corresponding non-overlapping RUs to the AP 110, such that the AP 110 may recognize the corresponding source STAs of the ELR-CTS frames. On the other hand, for the STA4 that is CCA busy, the AP 110 may determine to re-do the TXOP reservation or continuously transmit data using non-busy RUs, as shown in FIG. 3(c). It should be noted that, in comparison to the legacy CTS frame, which is always transmitted on the primary channel, the CTS separation may cover non-primary channels access as well if the supported BSS bandwidth is wider than 20 MHz, allowing the ELR-CTS frames to be transmitted on both primary and non-primary channels.

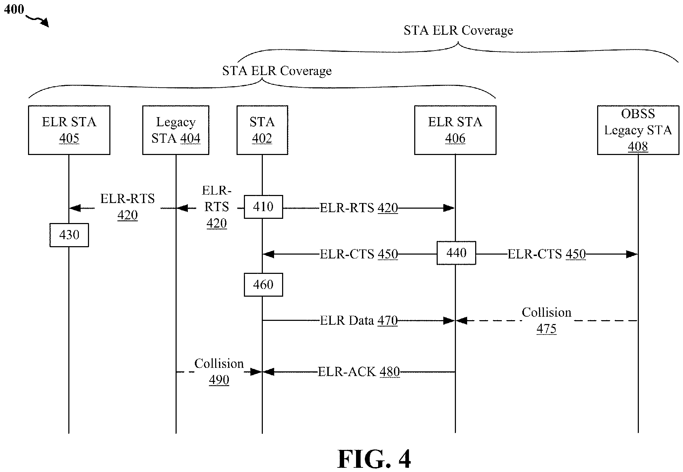

FIG. 4 is a diagram illustrating an example procedure of ELR-RTS/CTS transmission by a STA. The STA 402 may be, for example, an AP. In the example procedure 400, the STA 402 (i.e, the AP 110) is located such that a legacy STA 404 (which may be a non-AP STA not supporting the ELR, such as the ER STA 120) and two ELR STAs 405 and 406 (which may be non-AP STAs supporting the ELR, such as the ELR STA 130) are within the STA ELR coverage of the STA 402. Each of the ELR STAs 405 and 406 is located respectively at a distance from the STA 402 such that ELR PPDU(s) may be required to carry the RTS/CTS frames. Further, the ELR STA 406 is located such that an overlapping BSS (OBSS) legacy STA 408 (which may be a non-AP STA not supporting the ELR that belongs to another BSS) is within the STA ELR coverage of the ELR STA 406. The OBSS legacy STA 408 may be located within the STA ELR coverage of the STA 402 or outside the STA ELR coverage of the STA 402. In certain configurations, the STA 402 and the ELR STAs 405 and 406 support ELR and OFDMA.

The STA 402 may have data to be transmitted to one or more of the ELR STAs 405 and 406, and the data is expected to be carried by the ELR PPDU structure 300. If the ELR PPDU structure 300 is expected to carry a single Medium Access Control (MAC) Protocol Data Unit (MPDU), or the total airtime requirement is small, the STA 402 may transmit the ELR data directly without the ELR-RTS/CTS procedure.

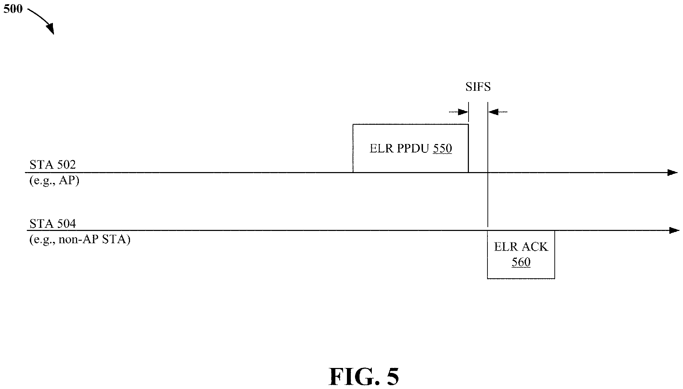

FIG. 5 is a diagram illustrating an example procedure of the data transmission by two STAs in FIG. 4. Specifically, the STA 502 may be the STA 402, e.g., an AP, and the STA 504 may be the ELR STA 406, e.g., a non-AP STA. As discussed, if the STA 502 (i.e., the STA 402) intends to transmit an ELR PPDU structure which carries a single MPDU, or the total airtime requirement is small, the STA 502 may generate and transmit the ELR PPDU 550 to the STA 504, without the ELR-RTS/CTS procedure. At the STA 504, upon receiving the ELR PPDU 550 and after waiting for a SIFS duration, the STA 504 transmits an ELR ACK 560 back to the STA 502. In certain embodiments, the SIFS duration may be, for example, 16 µs.

Referring back to FIG. 4, on the other hand, if the ELR PPDU structure 300 is expected to carry aggregated MPDU (AMPDU) or there are multiple ELR PPDU structures to be transmitted, and the total airtime requirement is relatively large, the STA 402 may attempt to reserve transmission opportunity (TXOP), such that the protected TXOP may reduce the chance of collision and re-transmission, thus benefitting to the ELR communication. Specifically, if the ELR STAs 405 and 406 are located outside the non-HT coverage range of the STA 402, the STA 402 may utilize the ELR-RTS/CTS mechanism for reserving TXOP. In other words, the STA 402 may attempt to become the TXOP holder in the network environment.

As shown in FIG. 4, at operation 410, the STA 402 generates the ELR-RTS frame 420 (e.g., a MU-RTS carried by the ELR PPDU structure 300) for reserving TXOP for the STA 402, and broadcasts the ELR RTS frame 420 on a channel, such that the legacy STA 404 and the ELR STAs 405 and 406 within the AP ELR coverage receive the broadcasted ELR RTS frame 420. In broadcasting the ELR RTS frame 420, the STA 402 is expected to receive a corresponding ELR CTS frame from one or more of the ELR STAs 405 and 406. Specifically, the STA 402 may set the TXOP duration RTS threshold, and the threshold may be adjusted depending upon the network condition. In certain configurations, although the transmission in the example procedure 400 is a downlink transmission as an example, the procedure of ELR-RTS/CTS transmission may be set for both downlink and uplink transmissions.

Once the STA 402 broadcasts the ELR RTS frame 420, the ELR STAs 405 and 406 may receive the ELR RTS frame 420 and perform corresponding actions. Specifically, at operation 440, the ELR STA 406, in response to the ELR RTS frame 420, generates a corresponding ELR CTS frame 450, and transmits the ELR CTS frame 450 on the channel to the STA 402 and the OBSS legacy STA 408. Specifically, to initialize OFDMA in the ELR communication using the MU-RTS frame (i.e., the ELR RTS frame 420), the ELR CTS frame 450 may support orthogonal transmission, e.g., in the RU or coding domain, thus allowing the STA 402 to separate the source of the ELR CTS frame 450.

Meanwhile, at operation 430, the ELR STA 405, in response to the ELR RTS frame 420, sets a network allocation vector (NAV), which is a virtual carrier-sensing mechanism used for indicating a duration that specifies the estimated transmission period required for the STA 402. Specifically, upon receiving the ELR RTS frame 420, the ELR STA 405 recognizes that the channel will be occupied within the duration (i.e., the estimated transmission period), and that the ELR STA 405 should be refrained from transmitting data on the channel during this duration. In one embodiment, the NAV may be in the form of a counter to indicate the duration. When the counter value of the NAV is non-zero, the ELR STA 405 determines the channel to be busy, such that the ELR STA 405 may choose not to transmit any data on the channel to cause potential collision. and when the NAV counts down to zero, the ELR STA 405 determines the channel to become idle, such that the ELR STA 405 may freely transmit data on the channel. In certain configurations, the STA 402 and the ELR STAs 405 and 406 (or any other non-AP STA supporting ELR) may support the new NAV counter and resetting schemes. However, the legacy STA 404 does not understand the ELR RTS frame 420 (or any message in the ELR PPDU structure 300 or in the ELR format). Thus, when the legacy STA 404 receives the ELR RTS frame 420, the legacy STA 404 does not set the NAV, which may cause further collision of reception for the STA 402 on the channel.

Once the ELR STA 406 transmits the ELR CTS frame 450, at operation 460, the STA 402 may, in response to receiving the ELR CTS frame 450, process the data to be transmitted and generate ELR data (i.e., data in at least one ELR PPDU structures 300). However, the OBSS legacy STA 408 does not understand the ELR CTS frame (or any message in the ELR PPDU structure 300 or in the ELR format). Thus, when the OBSS legacy STA 508 receives the ELR CTS frame 450, the OBSS legacy STA 408 does not set the NAV, which may cause further collision of reception for the ELR STA 406 on the channel.

At operation 470, the STA 402 transmits the ELR data on the channel to the ELR STA 406. However, the OBSS legacy STA 408 may also transmit data on the channel simultaneously in its own BSS, and at operation 475, the data may be received by the ELR STA 406, thus causing collision with the ELR data 470. In the case where the ELR STA 406 successfully receives the ELR data 470, at operation 480, the ELR STA 406 transmits a corresponding ELR acknowledgement (ELR-ACK) on the channel to the STA 402. However, at operation 490, the legacy STA 404 may also transmit data on the channel simultaneously to the STA 402, thus causing collision with the ELR-ACK 480.

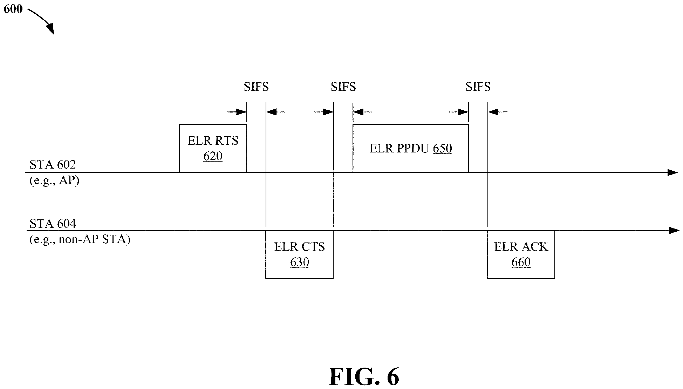

FIG. 6 is a diagram illustrating an example procedure of the RTS/CTS transmission by the two STAs in FIG. 4. Specifically, the STA 602 may be the STA 402, e.g., an AP, and the STA 604 may be the ELR STA 406, e.g., a non-AP STA. As shown in FIG. 6, the STA 602 (i.e., the STA 402) generates and broadcasts an ELR RTS frame 620 (i.e., the ELR RTS frame 420). At the STA 604 (i.e., the ELR STA 406), upon receiving the broadcasted ELR RTS frame 620 and after waiting for a SIFS duration, the STA 604 transmits an ELR CTS frame 630 (i.e., the ELR CTS frame 450). At the STA 602, upon receiving the ELR CTS 630 and after waiting for another SIFS duration, the STA 602 transmits the ELR PPDU(s) 650 (i.e., the ELR data 470). Then, at the STA 604, upon receiving the ELR PPDU(s) 650 and after waiting for yet another SIFS duration, the STA 604 transmits an ELR ACK 660 (i.e., the ELR ACK 480). In certain embodiments, each SIFS duration may be, for example, 16 µs. In certain configurations, in the ELR BSS, the ELR-NAVTimeout period is: (2 × aSIFSTime) + (ELR-CTS_Time) + aRxPHYStartDelay +(2 × aSlotTime), in which aRxPHYStartDelay is one or more integer delay values for each supported PHY clause, where each delay (in microseconds) is from the start of the PPDU at the receiver's antenna to the issuance of the earlier of the PHY-RXEARLYSIG.indication if sent or the PHY-RXSTART.indication primitive. In comparison, the legacy NAVTimeout period may be (2 × aSIFSTime) + (LG-CTS_Time) + aRxPHYStartDelay +(2 × aSlotTime).

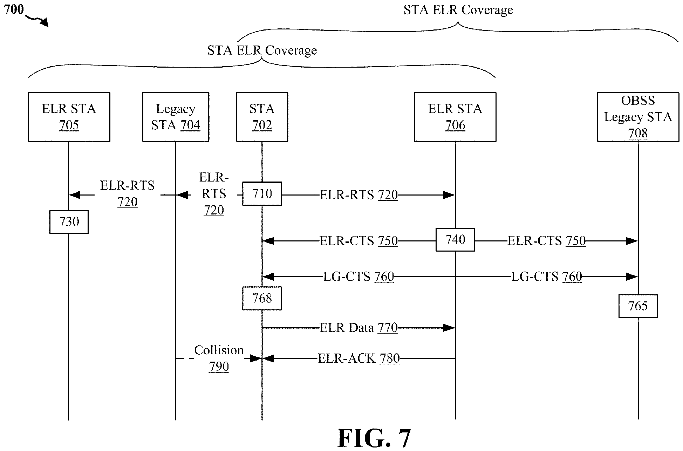

FIG. 7 is a diagram illustrating an example procedure of ELR-RTS/CTS transmission by a STA with link protection allowing the OBSS legacy STA to set the NAV. The STA 702 may be, for example, an AP. Similar to the example procedure 400, in the example procedure 700, the STA 702 (i.e., the AP 110) is located such that a legacy STA 704 (which may be a non-AP STA not supporting the ELR, such as the ER STA 120) and two ELR STAs 705 and 706 (which may be non-AP STAs supporting the ELR, such as the ELR STA 130) are within the STA ELR coverage of the STA 702. Each of the ELR STAs 705 and 706 is located respectively at a distance from the STA 702 such that ELR PPDU(s) may be required to carry the RTS/CTS frames. Further, the ELR STA 706 is located such that an OBSS legacy STA 708 (which may be a non-AP STA not supporting the ELR that belongs to another BSS) is within the STA ELR coverage of the ELR STA 706. The OBSS legacy STA 708 may be located within the STA ELR coverage of the STA 702 or outside the STA ELR coverage of the STA 702. In certain configurations, the STA 702 and the ELR STAs 705 and 706 support ELR and OFDMA. In this case, the STA 702 may attempt to become the TXOP holder in the network environment.

The main difference between the example procedure 700 from the example procedure 400 exists in that a link protection mechanism is applied at the ELR STA 706 using a legacy CTS frame for preventing transmission collision at the ELR STA 706 from the legacy devices (e.g., the OBSS legacy STA 708) during an estimated transmission period for the STA 702, such that the OBSS legacy STA 708 may be able to set the NAV. As shown in FIG. 7, at operation 710, the STA 702 generates the ELR-RTS frame 720 (e.g., a MU-RTS carried by the ELR PPDU structure 300) for reserving TXOP for the STA 702, and broadcasts the ELR RTS frame 720 on a channel, such that the legacy STA 704 and the ELR STAs 705 and 706 within the AP ELR coverage receive the broadcasted ELR RTS frame 720. In broadcasting the ELR RTS frame 720, the STA 702 is expected to receive a corresponding ELR CTS from one or more of the ELR STAs 705 and 706. In certain configurations, although the transmission in the example procedure 700 is a downlink transmission as an example, the procedure of ELR-RTS/CTS transmission may be set for both downlink and uplink transmissions.

Once the STA 702 broadcasts the ELR RTS frame 720, the ELR STAs 705 and 706 may receive the ELR RTS frame 720 and perform corresponding actions. Specifically, at operation 740, the ELR STA 706, in response to the ELR RTS frame 720, generates a corresponding ELR CTS frame 750, and transmits the ELR CTS frame 750 on the channel to the STA 702 and the OBSS legacy STA 708. Specifically, to initialize OFDMA in the ELR communication using the MU-RTS frame (i.e., the ELR RTS frame 720), the ELR CTS frame 750 may support orthogonal transmission, e.g., in the RU or coding domain, thus allowing the STA 702 to separate the source of the ELR CTS frame 750.

Meanwhile, at operation 730, the ELR STA 705, in response to the ELR RTS frame 720, sets a NAV. Specifically, upon receiving the ELR RTS frame 720, the ELR STA 705 recognizes that the channel will be occupied within a duration (i.e., the estimated transmission period), and that the ELR STA 705 should be refrained from transmitting data on the channel during this duration. Thus, the ELR STA 705 sets the NAV to indicate the duration (i.e., the estimated transmission period) in which the ELR STA 705 determines the channel to be busy. However, the legacy STA 704 does not understand the broadcasted ELR RTS frame 720 (or any message in the ELR PPDU structure 300 or in the ELR format). Thus, when the legacy STA 704 receives the ELR RTS frame 720, the legacy STA 704 does not set the NAV, which may cause further collision of reception for the STA 702 on the channel.

Once the ELR STA 706 transmits the ELR CTS frame 750, the ELR STA 706 further transmits a legacy CTS frame 760 on the channel to the OBSS legacy STA 708 as the link protection for the ELR STA 706. Although the OBSS legacy STA 708 does not understand the ELR CTS frame 750 (or any message in the ELR PPDU structure 300 or in the ELR format), the OBSS legacy STA 708 understands the legacy CTS frame 760. Thus, once the OBSS legacy STA 708 receives the legacy CTS frame 760, at operation 765, the OBSS legacy STA 708, in response to the legacy CTS frame 760, sets a NAV. Specifically, upon receiving the legacy CTS frame 760, the OBSS legacy STA 708 recognizes that the channel will be occupied within a duration (i.e., the estimated transmission period), and that the OBSS legacy STA 708 should be refrained from transmitting data on the channel during this duration. Thus, the OBSS legacy STA 708 sets the NAV to indicate the duration in which the OBSS legacy STA 708 determines the channel to be busy, thus avoiding from further collision of reception for the ELR STA 706.

Meanwhile, at operation 768, the STA 702 may, in response to receiving the ELR CTS frame 750, process the data to be transmitted and generate ELR data (i.e., data in at least one ELR PPDU structures 300). It should be noted that the STA 702 may wait for a time period for the ELR STA 706 to transmit the legacy CTS frame 760.

Once the ELR data is generated, the STA 702 transmits the ELR data 770 to the ELR STA 706. Since the OBSS legacy STA 708 has set the NAV, there will be no collision from the OBSS legacy STA 708 with the ELR data 770. Upon receiving the ELR data 770, the ELR STA 706 transmits a corresponding ELR acknowledgement (ELR-ACK) to the STA 702. However, at operation 790, it is still possible that the legacy STA 704 may also transmit data simultaneously to the STA 702, thus causing potential collision with the ELR-ACK 780.

Comparing with the example procedure 400, the example procedure 700 adopts the link protection mechanism applied at the ELR STA 706 using the legacy CTS frame 760, such that collision with the ELR data 770 from the OBSS legacy STA 708 may be prevented. However, a potential collision with the ELR-ACK 780 at the STA 702 is still possible.

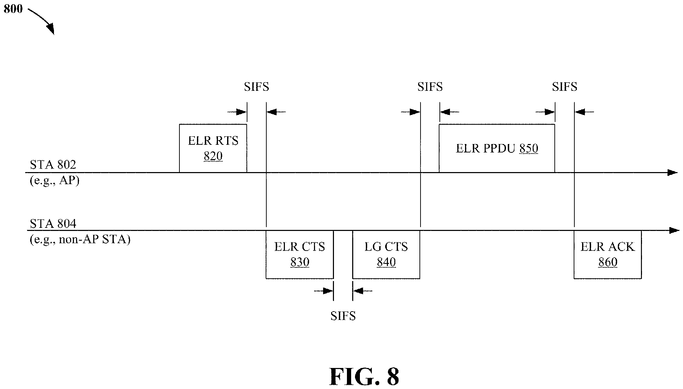

FIG. 8 is a diagram illustrating an example procedure of the RTS/CTS transmission by the AP and the ELR STA in FIG. 7. As shown in FIG. 8, the AP 802 (i.e., the STA 702) generates and broadcasts an ELR RTS frame 820 (i.e., the ELR RTS frame 720). At the ELR STA 804 (i.e., the ELR STA 706), upon receiving the broadcasted ELR RTS frame 820 and after waiting for a SIFS duration, the ELR STA 804 transmits an ELR CTS frame 830 (i.e., the ELR CTS frame 750). Then, after waiting for another SIFS duration, the ELR STA 804 transmits a legacy CTS frame 840 (i.e., the legacy CTS frame 760). At the AP 802, upon receiving the ELR CTS 830 and waiting for a period of time for the legacy CTS frame 840 and another SIFS duration, the AP 802 generates and transmits the ELR PPDU(s) 850 (i.e., the ELR data 770). Then, at the ELR STA 804, upon receiving the ELRPPDU(s) 850 and after waiting for yet another SIFS duration, the ELR STA 804 transmits an ELR ACK 860 (i.e., the ELR ACK 780). In certain embodiments, each SIFS duration may be, for example, 16 µs. In certain configurations, in the ELR BSS, the ELR-NAVTimeout period is: (3 × aSIFSTime) + (ELR-CTS_Time) + (LG-CTS_Time) + aRxPHYStartDelay +(2 × aSlotTime).

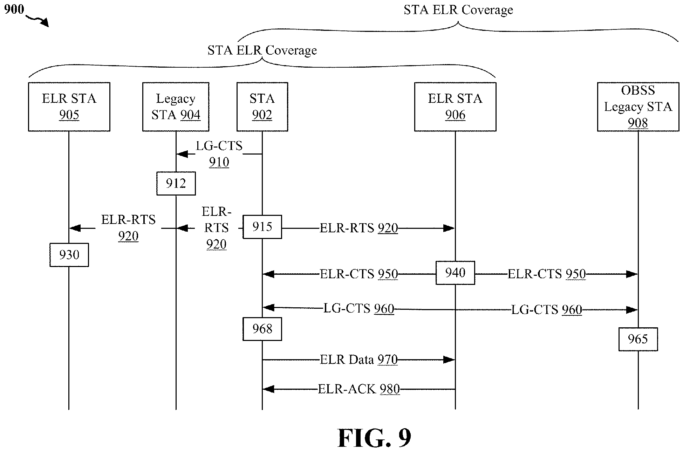

FIG. 9 is a diagram illustrating an example procedure of ELR-RTS/CTS transmission by a STA with full link protection. The STA 902 may be, for example, an AP. Similar to the example procedure 700, in the example procedure 900, the STA 902 (i.e., the AP 110) is located such that a legacy STA 904 (which may be a non-AP STA not supporting the ELR, such as the ER STA 120) and two ELR STAs 905 and 906 (which may be non-AP STAs supporting the ELR, such as the ELR STA 130) are within the STA ELR coverage of the STA 902. Each of the ELR STAs 905 and 906 is located respectively at a distance from the STA 902 such that ELR PPDU(s) may be required to carry the RTS/CTS frames. Further, the ELR STA 906 is located such that an OBSS legacy STA 908 (which may be a non-AP STA not supporting the ELR that belongs to another BSS) is within the STA ELR coverage of the ELR STA 906. The OBSS legacy STA 908 may be located within the STA ELR coverage of the STA 902 or outside the STA ELR coverage of the STA 902. In certain configurations, the STA 902 and the ELR STAs 905 and 906 support ELR and OFDMA. In this case, the STA 902 may attempt to become the TXOP holder in the network environment.

The main difference between the example procedure 900 from the example procedure 700 exists in that, in addition to the link protection mechanism applied at the ELR STA 906 using a legacy CTS frame, an additional link protection mechanism is also applied at the STA 902 using a legacy CTS-to-self mechanism for preventing transmission collision at the STA 902 from the legacy devices (e.g., the legacy STA 904) during an estimated transmission period for the STA 902, such that the transmission is with full link protection on both the STA 902 and the ELR STA 906. Specifically, in the CTS-to-self mechanism, the STA 902 transmits a legacy CTS frame without a preceding RTS frame using the modulation technique of legacy 802.11b STAs, such that the legacy STAs not supporting the ELR (such as the legacy STA 904) receiving the legacy CTS frame may understand that there will be a transmission, which will prompt the legacy devices to set a NAV.

As shown in FIG. 9, before transmitting an ELR RTS frame, the STA 902 transmits a legacy CTS-to-self frame 910 using the CTS-to-self mechanism on a channel to the legacy STA 904 as the link protection for the STA 902. Once receiving the legacy CTS frame 910, the legacy STA 904 may set a NAV. Specifically, upon receiving the legacy CTS frame 910, the legacy STA 904 recognizes that the channel will be occupied within a duration (i.e., the estimated transmission period), and that the legacy STA 904 should be refrained from transmitting data on the channel during this duration. Thus, the legacy STA 904 sets the NAV to indicate the duration in which the legacy STA 904 determines the channel to be busy, thus avoiding from further collision of reception for the STA 902.

At operation 915, after transmitting the legacy CTS frame 910, the STA 902 generates the ELR-RTS frame 920 (e.g., a MU-RTS carried by the ELR PPDU structure 300) for reserving TXOP for the STA 902, and broadcasts the ELR RTS frame on the channel, such that the legacy STA 904 and the ELR STAs 905 and 906 within the AP ELR coverage receive the broadcasted ELR RTS frame 920. In broadcasting the ELR RTS frame 920, the STA 902 is expected to receive a corresponding ELR CTS frame from one or more of the ELR STAs 905 and 906. In certain configurations, although the transmission in the example procedure 900 is a downlink transmission as an example, the procedure of ELR-RTS/CTS transmission may be set for both downlink and uplink transmissions.

Once the STA 902 broadcasts the ELR RTS frame 920, the ELR STAs 905 and 906 may receive the ELR RTS frame 920 and perform corresponding actions. Specifically, at operation 940, the ELR STA 906, in response to the ELR RTS frame 920, generates a corresponding ELR CTS frame 950, and transmits the ELR CTS frame 950 on the channel to the STA 902 and the OBSS legacy STA 908. Specifically, to initialize OFDMA in the ELR communication using the MU-RTS frame (i.e., the ELR RTS frame 920), the ELR CTS frame 950 may support orthogonal transmission, e.g., in the RU or coding domain, thus allowing the STA 902 to separate the source of the ELR CTS frame 950.

Meanwhile, at operation 930, the ELR STA 905, in response to the ELR RTS frame 920, sets a NAV. Specifically, upon receiving the ELR RTS frame 920, the ELR STA 905 recognizes that the channel will be occupied within a duration (i.e., the estimated transmission period), and that the ELR STA 905 should be refrained from transmitting data on the channel during this duration. Thus, the ELR STA 905 sets the NAV to indicate the duration (i.e., the estimated transmission period) in which the ELR STA 905 determines the channel to be busy. On the other hand, although the legacy STA 904 does not understand the broadcasted ELR RTS frame 920 (or any message in the ELR PPDU structure 300 or in the ELR format), there is no need for the legacy STA 904 to set a NAV in response to the ELR RTS frame 920, as the legacy STA 904 has already set the NAV at the earlier operation 912 in response to the legacy CTS frame 910.

Once the ELR STA 906 transmits the ELR CTS frame 950, the ELR STA 906 further transmits a legacy CTS frame 960 on the channel to the OBSS legacy STA 908 as the link protection for the ELR STA 906. Although the OBSS legacy STA 908 does not understand the ELR CTS frame 950 (or any message in the ELR PPDU structure 300 or in the ELR format), the OBSS legacy STA 908 understands the legacy CTS frame 960. Thus, once the OBSS legacy STA 908 receives the legacy CTS frame 960, at operation 965, the OBSS legacy STA 908, in response to the legacy CTS frame 960, sets a NAV. Specifically, upon receiving the legacy CTS frame 960, the OBSS legacy STA 908 recognizes that the channel will be occupied within a duration (i.e., the estimated transmission period), and that the OBSS legacy STA 908 should be refrained from transmitting data on the channel during this duration. Thus, the OBSS legacy STA 908 sets the NAV to indicate the duration in which the OBSS legacy STA 908 determines the channel to be busy, thus avoiding from further collision of reception for the ELR STA 906.

Meanwhile, at operation 968, the STA 902 may, in response to receiving the ELR CTS frame 950, process the data to be transmitted and generate ELR data (i.e., data in at least one ELR PPDU structures 300). It should be noted that the STA 902 may wait for a time period for the ELR STA 906 to transmit the legacy CTS frame 960.

Once the ELR data is generated, the STA 902 transmits the ELR data 970 on the channel to the ELR STA 906. Since the OBSS legacy STA 908 has set the NAV, there will be no collision from the OBSS legacy STA 908 with the ELR data 970. Upon receiving the ELR data 970, the ELR STA 906 transmits a corresponding ELR acknowledgement (ELR-ACK) to the STA 902. Since the legacy STA 904 has set the NAV, there will be no collision from the legacy STA 904 with the ELR-ACK 980.

Comparing with the example procedure 700, the example procedure 900 further adopts the link protection mechanism applied at the STA 902 using the legacy CTS frame 910 (i.e., the CTS-to-self mechanism), such that collision with the ELR data 970 from the OBSS legacy STA 908 may be prevented. Further, the example procedure 900 the link protection mechanism applied at the ELR STA 906 using the legacy CTS frame 960 ensures that collision with the ELR data 970 from the OBSS legacy STA 908 may be prevented.

It should be noted that, in the example procedures 700 and 900, each of the ELR STAs 705/905 and 706/906 may use information from the broadcasted ELR RTS frame 720/920 as the most recent basis to update its NAV setting, and the ELR STA (e.g., the ELR STA 705/905, or any other ELR device that receives the broadcasted ELR RTS frame 720/920) that uses the information from the broadcasted ELR RTS frame 720/920 as the most recent basis to update its NAV setting is permitted to reset its NAV if no PHY-RXEARLYSIG.indication or PHY-RXSTART.indication primitive is received from the PHY layer during an ELR-NAVTimeout period starting when the MAC receives a PHY-RXEND.indication primitive corresponding to the detection of the ELR-RTS frame 720/920.

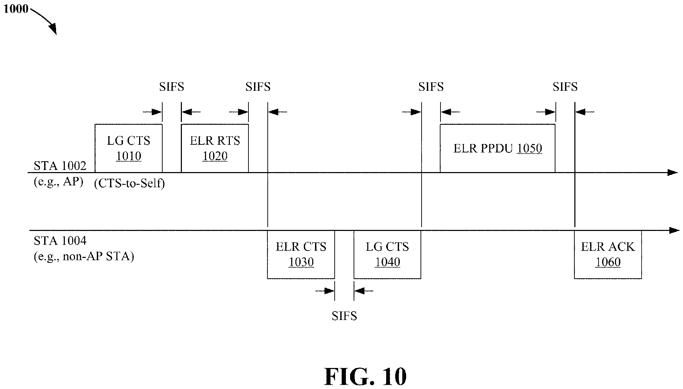

FIG. 10 is a diagram illustrating an example procedure of the RTS/CTS transmission by the AP and the ELR STA in FIG. 9. As shown in FIG. 10, the AP 1002 (i.e., the STA 902) generates and transmits a legacy CTS frame 1010 (i.e., the legacy CTS frame 910) as the CTS-to-self mechanism. After waiting for a SIFS duration, the AP 1002 generates and broadcasts an ELR RTS frame 1020 (i.e., the ELR RTS frame 920). At the ELR STA 1004 (i.e., the ELR STA 906), upon receiving the broadcasted ELR RTS frame 1020 and after waiting for a SIFS duration, the ELR STA 1004 transmits an ELR CTS frame 1030 (i.e., the ELR CTS frame 950). Then, after waiting for another SIFS duration, the ELR STA 1004 transmits a legacy CTS frame 1040 (i.e., the legacy CTS frame 960). At the AP 1002, upon receiving the ELR CTS 1030 and waiting for a period of time for the legacy CTS frame 1040 and another SIFS duration, the AP 1002 transmits the ELR PPDU(s) 1050 (i.e., the ELR data 970). Then, at the ELR STA 1004, upon receiving the ELR PPDU(s) 1050 and after waiting for yet another SIFS duration, the ELR STA 1004 transmits an ELR ACK 1060 (i.e., the ELR ACK 980). In certain embodiments, each SIFS duration may be, for example, 16 µs. In certain configurations, in the ELR BSS, the ELR-NAVTimeout period is: (3 × aSIFSTime) + (ELR-CTS_Time) + (LG-CTS_Time) + aRxPHYStartDelay +(2 × aSlotTime).

In the example procedures 700 and 900, the transmission is a downlink transmission, as the ELR data is transmitted to the ELR STA 706/906 by the STA 702/902. On the other hand, the link protection mechanism may also apply to an uplink transmission, where the ELR data is transmitted to the AP by an ELR STA.

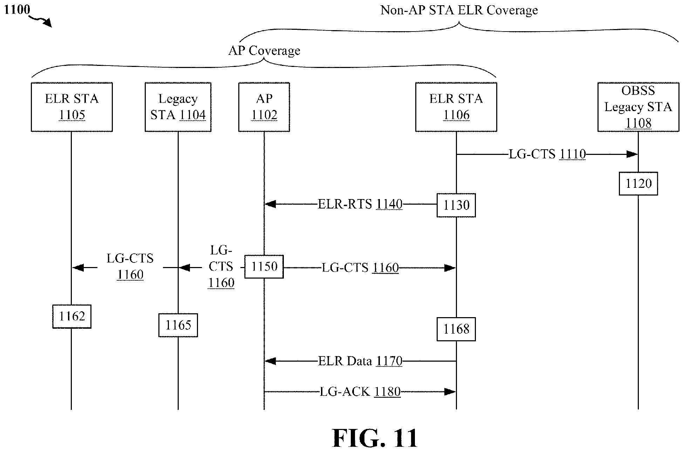

FIG. 11 is a diagram illustrating an example procedure of ELR-RTS/CTS transmission by an ELR STA with link protection. The ELR STA 1106 may be, for example, a non-AP STA supporting the ELR. In the example procedure 1100, the AP 1102 (i.e., the AP 110) is located such that a legacy STA 1104 (which may be a non-AP STA not supporting the ELR, such as the ER STA 120) and two ELR STAs 1105 and 1106 (which may be non-AP STAs supporting the ELR, such as the ELR STA 130) are within the AP coverage of the AP 1102. Each of the ELR STAs 1105 and 1106 is located respectively at a distance from the AP 1102 such that ELR PPDU(s) may be required to carry the RTS/CTS frames. Further, the ELR STA 1106 is located such that an OBSS legacy STA 1108 (which may be a non-AP STA not supporting the ELR that belongs to another BSS) is within the non-AP STA ELR coverage of the ELR STA 1106. The OBSS legacy STA 1108 may be located within the AP coverage of the AP 1102 or outside the AP coverage of the AP 1102. In certain configurations, the AP 1102 and the ELR STAs 1105 and 1106 support ELR and OFDMA. In this case, the ELR STA 1106 may attempt to become the TXOP holder in the network environment.

In the example procedure 1100, the link protection mechanism is applied at the ELR STA 1106 using a legacy CTS-to-self mechanism for preventing transmission collision at the ELR STA 1106 from the legacy non-AP STAs (e.g., the OBSS legacy STA 1108) during an estimated transmission period for the ELR STA 1106. Specifically, in the CTS-to-self mechanism, the ELR STA 1106 transmits a legacy CTS frame without a preceding RTS frame using the modulation technique of legacy 802.11b devices, such that the legacy non-AP STAs (such as the OBSS legacy STA 1108) receiving the legacy CTS frame may understand that there will be a transmission, which will prompt the legacy non-AP STAs to set a NAV.

As shown in FIG. 11, before transmitting an ELR RTS frame, the ELR STA 1106 transmits a legacy CTS-to-self frame 1110 on a channel to the OBSS legacy STA 1108 (or any legacy non-AP STA within the non-AP STA ELR coverage of the ELR STA 1106) as the link protection for the ELR STA 1106. Upon receiving the legacy CTS frame 1110, the OBSS legacy STA 1108 recognizes that the channel will be occupied within a duration (i.e., the estimated transmission period), and that the OBSS legacy STA 1108 should be refrained from transmitting data on the channel during this duration. Thus, at operation 1120, the OBSS legacy STA 1108 sets aNAV, which indicates the duration in which the OBSS legacy STA 1108 determines the channel to be busy, thus avoiding from further collision of reception for the ELR STA 1106.

At operation 1130, after transmitting the legacy CTS frame 1110, the ELR STA 1106 generates the ELR-RTS frame 1140 (e.g., a MU-RTS carried by the ELR PPDU structure 300) for reserving TXOP for the ELR STA 1106, and transmits the ELR RTS frame 1140 on the channel to the AP 1102 (as well as the OBSS legacy STA 1108) within the non-AP STA ELR coverage. In transmitting the ELR RTS frame 1140, the ELR STA 1106 is expected to receive a corresponding ELR CTS frame from the AP 1102.

Once the ELR STA 1106 transmits the ELR RTS frame 1140, the AP 1102 may receive the ELR RTS frame 1140 and perform corresponding actions. In certain configurations, due to nature of the 6dB imbalance transmission power of the AP 1102 and the non-AP STA (i.e., the ELR STA 1106), the AP 1102 may employ only a legacy CTS frame in response to the ELR RTS frame 1140 if the legacy CTS frame may reach the ELR STA 1106 (e.g., when the ELR STA 1106 is located inside the non-HT coverage range of the AP 1102). In other words, the AP 1102 may choose not to generate and transmit an ELR CTS frame in response to the ELR RTS frame 1140. At operation 1150, the AP 1102, in response to the ELR RTS frame 1140, may generate a corresponding legacy CTS frame 1160, and transmit the legacy CTS frame 1160 on the channel to the ELR STAs 1105 and 1106 and the legacy STA 1104. In other words, each of the ELR STAs 1105 and 1106 and the legacy STA 1104 will receive the legacy CTS frame 1160. In certain configurations, the AP 1102 may choose to generate and transmit dual CTS frames to the ELR STAs 1105 and 1106 and the legacy STA 1104, and the dual CTS frames may include an ELR CTS frame and a legacy CTS frame.

At operation 1162, the ELR STA 1105, in response to the legacy CTS frame 1160, sets a NAV. Specifically, upon receiving the legacy CTS frame 1160, the ELR STA 1105 recognizes that the channel will be occupied within a duration (i.e., the estimated transmission period), and that the ELR STA 1105 should be refrained from transmitting data on the channel during this duration. Thus, the ELR STA 1105 sets the NAV to indicate the duration (i.e., the estimated transmission period) in which the ELR STA 1105 determines the channel to be busy. On the other hand, the legacy STA 1104 understands the legacy CTS frame 1160. Thus, in response to the legacy CTS frame 1160, at operation 1165, the legacy STA 1104 sets a NAV indicating the duration (i.e., the estimated transmission period) in which the legacy STA 1104 determines the channel to be busy.

On the other hand, at operation 1168, in response to receiving the legacy CTS frame 1160, the ELR STA 1106 may process the data to be transmitted and generate ELR data (i.e., data in at least one ELR PPDU structures 300). Once the ELR data is generated, the ELR STA 1106 transmits the ELR data 1170 to the AP 1102. Since the legacy STA 1104 has set the NAV, there will be no collision from the legacy STA 1104 with the ELR data 1170. Upon receiving the ELR data 1170, the AP 1102 transmits a corresponding ACK to the ELR STA 1106. Specifically, due to nature of the 6dB imbalance transmission power of the AP 1102 and the non-AP STA (i.e., the ELR STA 1106), the ACK 1180 may be a legacy ACK. Since the OBSS legacy STA 1108 has set the NAV, there will be no collision from the OBSS legacy STA 1108 with the ACK 1180.

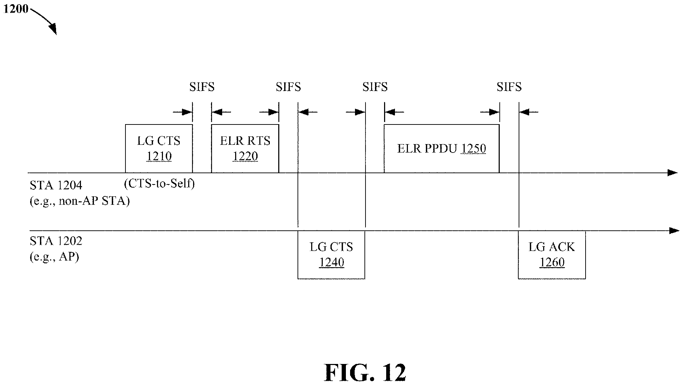

FIG. 12 is a diagram illustrating an example procedure of the RTS/CTS transmission by the AP and the ELR STA in FIG. 11. As shown in FIG. 12, the ELR STA 1204 (i.e., the ELR STA 1106) transmits a legacy CTS frame 1210 (i.e., the legacy CTS frame 1110) as the CTS-to-self mechanism. After waiting for a short interframe space (SIFS) duration, the ELR STA 1204 transmits an ELR RTS frame 1220 (i.e., the ELR RTS frame 1140). At the AP 1202 (i.e., the AP 1102), upon receiving the ELR RTS frame 1220 and after waiting for a SIFS duration, the AP 1202 may transmit a legacy CTS frame 1240 (i.e., the legacy CTS frame 1160). At the ELR STA 1204, upon receiving the legacy CTS frame 1240 and waiting for another SIFS duration, the ELR STA 1204 generates and transmits the ELR PPDU(s) 1250 (i.e., the ELR data 1170). Then, at the AP 1202, upon receiving the ELR PPDU(s) 1250 and after waiting for yet another SIFS duration, the AP 1202 transmits a legacy ACK 1260 (i.e., the legacy ACK 1180). In certain embodiments, each SIFS duration may be, for example, 16 µs. The used timeout period can be either NAVTimeout or ELR-NAVTimeout, depends on the receiving ELR-RTS performance (e.g., power, PER). In certain configurations, the NAVTimeout period may be: (2 × aSIFSTime) + (LG-CTS_Time) + aRxPHYStartDelay + (2 × aSlotTime).

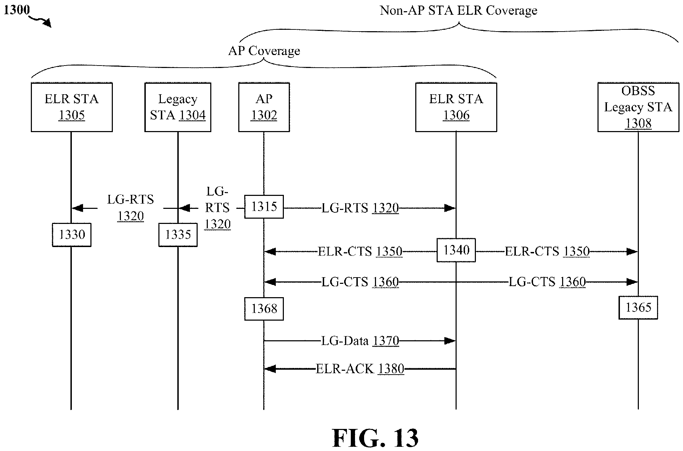

FIG. 13 is a diagram illustrating an example procedure of RTS/CTS transmission by an ELR STA with link protection with a legacy AP. The ELR STA 1306 may be, for example, a non-AP STA supporting the ELR. In the example procedure 1300, the AP 1302 (i.e., the AP 110) may be an ELR AP (i.e., an AP supporting the ELR), which is located such that a legacy STA 1304 (which may be a non-AP STA not supporting the ELR, such as the ER STA 120) and two ELR STAs 1305 and 1306 (which may be non-AP STAs supporting the ELR, such as the ELR STA 130) are within the AP coverage of the AP 1302. Further, the ELR STA 1306 is located such that an OBSS legacy STA 1308 (which may be a non-AP STA not supporting the ELR that belongs to another BSS) is within the non-AP STA ELR coverage of the ELR STA 1306. The OBSS legacy STA 1308 may be located within the AP coverage of the AP 1302 or outside the AP coverage of the AP 1302. In certain configurations, the ELR STAs 1305 and 1306 support ELR and OFDMA. In this case, the AP 1302 may attempt to become the TXOP holder in the network environment, and the ELR STA 1306 is the STA to receive data from the TXOP holder (i.e., the AP 1302).

The main difference between the example procedure 1300 from the previous example procedures (such as example procedures 700 and 900) exists in that, due to nature of the 6dB imbalance transmission power of the AP 1302 and the non-AP STA (i.e., the ELR STA 1306), the AP 1302, which is an ELR AP that supports ELR, may choose to transmit a legacy RTS frame instead of an ELR RTS frame. As shown in FIG. 13, at operation 1315, the AP 1302 generates the legacy-RTS frame 1320, which is not carried by the ELR PPDU structure 300, for reserving TXOP for the AP 1302, and broadcasts the legacy RTS frame 1320 on a channel, such that the legacy STA 1304 and the ELR STAs 1305 and 1306 within the AP coverage receive the broadcasted legacy RTS frame 1320. In broadcasting the legacy RTS frame 1320, the AP 1302 is expected to receive a corresponding ELR CTS frame or a corresponding legacy CTS frame from one or more of the legacy STA 1304 and the ELR STAs 1305 and 1306. In certain configurations, although the transmission in the example procedure 1300 is a downlink transmission as an example, the procedure of RTS/CTS transmission may be set for both downlink and uplink transmissions.

Once the AP 1302 broadcasts the legacy RTS frame 1320, the legacy STA 1304 and the ELR STAs 1305 and 1306 may receive the legacy RTS frame 1320 and perform corresponding actions. Specifically, at operation 1330, the ELR STA 1305, in response to the legacy RTS frame 1320, sets a NAV. Specifically, upon receiving the legacy RTS frame 1320, the ELR STA 1305 recognizes that the channel will be occupied within a duration (i.e., the estimated transmission period), and that the ELR STA 1305 should be refrained from transmitting data on the channel during this duration. Thus, the ELR STA 1305 sets the NAV to indicate the duration (i.e., the estimated transmission period) in which the ELR STA 1305 determines the channel to be busy. Similarly, at operation 1335, the legacy STA 1304, in response to the legacy RTS frame 1320, also sets a NAV. Specifically, upon receiving the legacy RTS frame 1320, the legacy STA 1304 recognizes that the channel will be occupied within a duration (i.e., the estimated transmission period), and that the legacy STA 1304 should be refrained from transmitting data on the channel during this duration. Thus, the legacy STA 1304 sets the NAV to indicate the duration (i.e., the estimated transmission period) in which the legacy STA 1304 determines the channel to be busy.

Meanwhile, at operation 1340, the ELR STA 1306, in response to the legacy RTS frame 1320, generates dual CTS frames, including a corresponding ELR CTS frame 1350 and a legacy CTS frame 1360. The ELR STA 1306 then transmits the ELR CTS frame 1350 and the legacy CTS frame 1360 on the channel to the AP 1302 and the OBSS legacy STA 1308. It should be noted that, although FIG. 13 shows that the ELR CTS frame 1350 is transmitted before the legacy CTS frame 1360, it is possible that the legacy CTS frame 1360 may be transmitted before the ELR CTS frame 1350. In other words, the ELR STA 1306 may transmit the dual CTS frames in any sequence.

At the OBSS legacy STA 1308, although the OBSS legacy STA 1308 does not understand the ELR CTS frame 1350 (or any message in the ELR PPDU structure 300 or in the ELR format), the OBSS legacy STA 1308 understands the legacy CTS frame 1360. Thus, once the OBSS legacy STA 1308 receives the legacy CTS frame 1360, at operation 1365, the OBSS legacy STA 1308, in response to the legacy CTS frame 1360, sets a NAV. Specifically, upon receiving the legacy CTS frame 1360, the OBSS legacy STA 1308 recognizes that the channel will be occupied within a duration (i.e., the estimated transmission period), and that the OBSS legacy STA 1308 should be refrained from transmitting data on the channel during this duration. Thus, the OBSS legacy STA 1308 sets the NAV to indicate the duration in which the OBSS legacy STA 1308 determines the channel to be busy, thus avoiding from further collision of reception for the ELR STA 1306.

Meanwhile, at operation 1368, the AP 1302 may, in response to receiving the ELR CTS frame 750 and the legacy CTS frame 760, process the data to be transmitted and generate data. Specifically, once the AP 1302 receives the legacy CTS frame 1360, at operation 1368, the AP 102 generates the data, which may be in the ELR format or in the legacy format.

Once the data is generated, the AP 1302 transmits the data 1370 to the ELR STA 1306. Since the OBSS legacy STA 1308 has set the NAV, there will be no collision from the OBSS legacy STA 1308 with the data 1370. Upon receiving the data 1370, the ELR STA 1306 transmits a corresponding acknowledgement (which may be an ACK in the ELR format) to the AP 1302. Since both the legacy STA 1304 and the ELR STA 1305 have set the NAV, there will be no collision from the legacy STA 1304 and the ELR STA 1305 with the ACK 1380.

In certain configurations, the ELR STA 1306, in response to the legacy RTS frame 1320, may choose to generate and transmit an ELR CTS frame (i.e., the ELR CTS frame 1350) instead of transmitting the dual CTS frames. In this case, the OBSS legacy STA 1308 will not understand the ELR CTS frame 1350. Thus, the OBSS legacy STA 1308 does not set the NAV.

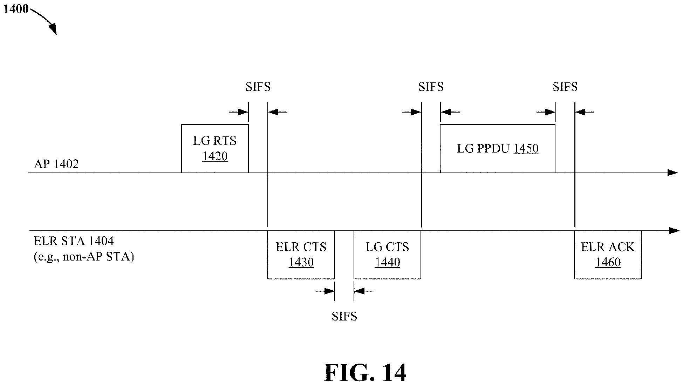

FIG. 14 is a diagram illustrating an example procedure of the RTS/CTS transmission by the AP and the ELR STA in FIG. 13. As shown in FIG. 14, the AP 1402 (i.e., the AP 1302) generates and broadcasts a legacy RTS frame 1420 (i.e., the legacy RTS frame 1320). At the ELR STA 1404 (i.e., the ELR STA 1306), upon receiving the broadcasted legacy RTS frame 1420 and after waiting for a SIFS duration, the ELR STA 804 generates and transmits dual CTS frames, which include an ELR CTS frame 1430 (i.e., the ELR CTS frame 1350) and a legacy CTS frame 1440 (i.e., the legacy CTS frame 1360). In certain embodiment, the ELR STA 1404 may wait for another SIFS duration between transmitting the ELR CTS frame 1430 and the legacy CTS frame 1440. At the AP 1402, upon receiving the ELR CTS frame 1430 and the legacy CTS frame 1440 and waiting for another SIFS duration, the AP 1402 generates and transmits the PPDU(s) 1450 (i.e., the data 1370, which may be in the ELR format or in the legacy format). Then, at the ELR STA 1404, upon receiving the PPDU(s) 1450 and after waiting for yet another SIFS duration, the ELR STA 1404 generates and transmits an ACK 1460 (i.e., the ACK 1380, which may be in the ELR format). In certain embodiments, each SIFS duration may be, for example, 16 µs.

In certain configurations, the link protection mechanism using the legacy CTS frame in the CTS-to-self mechanism allows the legacy non-AP STAs to NAV protection, and prevents the legacy non-AP STAs from resetting the NAV before the desired TXOP ends. However, the legacy non-AP STAs will not be able to reset the NAV if there is no corresponding CTS frame responded to the ELR RTS frame transmitted by the TXOP holder. In this case, a CF-end frame may be used to terminate or truncate the TXOP. For example, in certain configurations, after transmitting the ELR RTS frame, if there is no legacy or ELR CTS frame received in the estimated transmission period, the TXOP holder may send a legacy CF-end frame (i.e., a CF-end frame in the legacy format) to terminate the TXOP. In certain configurations, if the TXOP holder determines that there is no more data frame to be transmitted, the TXOP holder may send dual CF-end frames, which include a legacy CF-end frame (i.e., a CF-end frame in the legacy format) and an ELR CF-end frame (i.e., a CF-end frame in the ELR format), to truncate the TXOP. For example, the TXOP holder may transmit the legacy CF-end frame to the legacy STAs, and transmit the ELR CF-end frame to the ELR STAs. In certain configurations, a SIFS duration may exist between transmitting the legacy CF-end frame and transmitting the ELR CF-end frame.

In certain configurations, the AP can set the TXOP duration RTS threshold value depending on its transmitted total PPDU duration, coverage, estimated collision and re-transmission chance. For example, the TXOP duration RTS threshold value in the ELR operation can reuse some definitions in the HE operation element, in which the value may be: (1) between 1 and 1022 to enable TXOP duration-based RTS/CTS exchanges of its associated STAs, or (2) 1023 to disable TXOP duration-based RTS/CTS exchanges of its associated STAs. The unit of the RTS threshold is 32 us.

In the link protection mechanism as discussed, multiple considerations are discussed depending on the ELR STA locations (within the AP non-HT coverage or not). Based on multiple cases, the RTS/CTS content in ELR may need modifications. For example, the ELR RTS frame (i.e., RTS frame carried in the ELR format) may add an additional indicator to indicate the total CTS duration (including ELR CTS and LG CTS if presented). Thus, the ELR capable device can update its NAVTimeout duration accordingly. For example, if collision and re-transmission usually happens, TXOP initiator/holder can (1) reduce the RTS threshold and/or (2) enable the subsequently LG-CTS. In certain configurations, under the full link protection, the ELR-NAVTimeout period should set as (3 × aSIFSTime) + (ELR-CTS_Time) + (LG-CTS_Time) + aRxPHYStartDelay +(2 × aSlotTime).

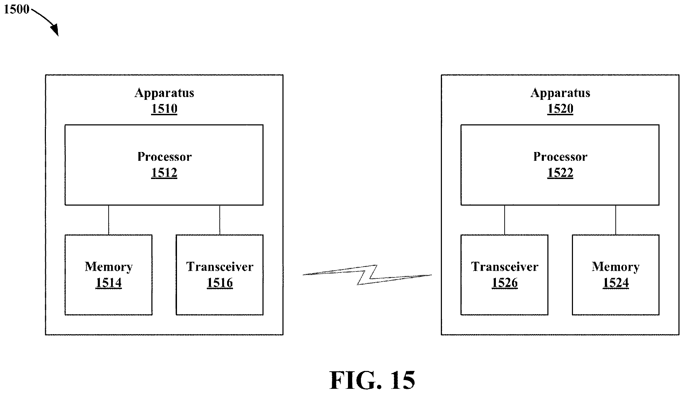

FIG. 15 is a diagram illustrating an exemplary communication system 1500, which has two apparatuses 1510 and 1520. Each of the apparatus 1510 and the apparatus 1520 may perform various functions to implement schemes, techniques, processes and methods described herein pertaining to the channel switch operation, including the scheme described above with respect to various proposed designs, concepts, schemes, systems and methods described above as well as processes described below. For instance, the apparatus 1510 may be implemented in the AP 110 as shown in FIG. 1 and the apparatus 1520 may be implemented in the non-AP STAs (i.e., the ER STA 120 and/or the ELR STA 130) as shown in FIG. 1.

Each of the apparatus 1510 and the apparatus 1520 may be a part of an electronic apparatus, which may be a non-AP STA or an AP, such as a portable or mobile apparatus, a wearable apparatus, a wireless communication apparatus or a computing apparatus. When implemented in a non-AP STA, each of the apparatus 1510 and the apparatus 1520 may be implemented in a smartphone, a smart watch, a personal digital assistant, a digital camera, or a computing equipment such as a tablet computer, a laptop computer or a notebook computer. Each of the apparatus 1510 and the apparatus 1520 may also be a part of a machine type apparatus, which may be an IoT apparatus such as an immobile or a stationary apparatus, a home apparatus, a wire communication apparatus or a computing apparatus. For instance, each of the apparatus 1510 and the apparatus 1520 may be implemented in a smart thermostat, a smart fridge, a smart door lock, a wireless speaker or a home control center. When implemented in or as a network apparatus, the apparatus 1510 and/or the apparatus 1520 may be implemented in a network node, such as an AP in a WLAN.

In certain embodiments, each of the apparatus 1510 and the apparatus 1520 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the scheme described above, each of the apparatus 1510 and the apparatus 1520 may be implemented in or as a non-AP STA or an AP. Each of the apparatus 1510 and the apparatus 1520 may include at least some of those components shown in FIG. 15, such as a processor 1512 and a processor 1522, respectively, for example. Each of the apparatus 1510 and the apparatus 1520 may further include one or more other components not pertinent to the proposed scheme of the present disclosure (e.g., internal power supply, display device and/or user interface device), and, thus, such component(s) of the apparatus 1510 and the apparatus 1520 are neither shown in FIG. 15 nor described below in the interest of simplicity and brevity.

In certain embodiments, the processor 1512 and the processor 1522 may be implemented in the form of one or more single-core processors, one or more multi-core processors, one or more RISC processors or one or more CISC processors. That is, even though a singular term "a processor" is used herein to refer to the processor 1512 and the processor 1522, the processor 1512 and the processor 1522 may include multiple processors in some implementations and a single processor in other implementations in accordance with the present disclosure. In certain embodiments, the processor 1512 and the processor 1522 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in certain embodiments, the processor 1512 and the processor 1522 is a special-purpose machine specifically designed, arranged and configured to perform specific tasks including those pertaining to system parameters transmission scheme in wireless communications in accordance with various implementations of the present disclosure.

In certain embodiments, the apparatus 1510 may further include a memory 1514 coupled to the processor 1512 and capable of being accessed by the processor 1512 and storing data therein. In some implementations, the apparatus 1520 may further include a memory 1524 coupled to the processor 1522 and capable of being accessed by the processor 1522 and storing data therein. Each of the memory 1514 and the memory 1524 may include a type of random-access memory (RAM) such as dynamic RAM (DRAM), static RAM (SRAM), thyristor RAM (T-RAM) and/or zero-capacitor RAM (Z-RAM). Alternatively, or additionally, each of the memory 1514 and the memory 1524 may include a type of read-only memory (ROM) such as mask ROM, programmable ROM (PROM), erasable programmable ROM (EPROM) and/or electrically erasable programmable ROM (EEPROM). Alternatively, or additionally, each of the memory 1514 and the memory 1524 may include a type of non-volatile random-access memory (NVRAM) such as flash memory, solid-state memory, ferroelectric RAM (FeRAM), magnetoresistive RAM (MRAM) and/or phase-change memory.

In certain embodiments, the apparatus 1510 may also include a transceiver 1516 coupled to the processor 1512. The transceiver 1516 may include a transmitter capable of wirelessly transmitting and a receiver capable of wirelessly receiving data. In certain embodiments, the apparatus 1520 may also include a transceiver 1526 coupled to the processor 1522. The transceiver 1526 may include a transmitter capable of wirelessly transmitting and a receiver capable of wirelessly receiving data.

Each of the apparatus 1510 and the apparatus 1520 may be a communication entity capable of communicating with each other using various proposed schemes in accordance with the present disclosure. In certain embodiments, the apparatus 1510 may function as the AP 110, and the apparatus 1520 may function as one of the non-AP STAs (e.g., the ER STA 120 and/or the ELR STA 130) to perform the methods, processes and schemes as described.

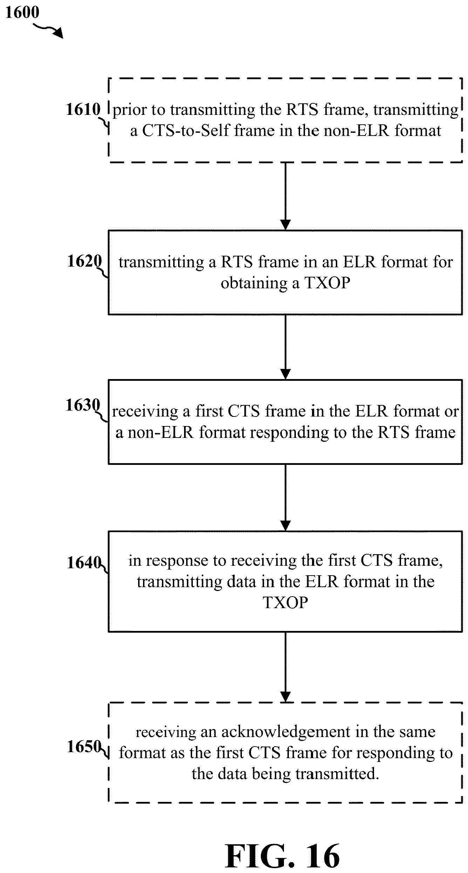

FIG. 16 is a flow chart of a method (process) for wireless communication of a STA. The method may be performed by a STA (e.g., the STA 702, the STA 902, the ELR STA 1106, the AP 1302). Optionally, at operation 1610, prior to transmitting the RTS frame, the STA transmits a CTS-to-Self frame in the non-ELR format. At operation 1620, the STA transmits a RTS frame in an ELR format for obtaining a TXOP. At operation 1630, the STA receives a first CTS frame in the ELR format or a non-ELR format responding to the RTS frame. At operation 1640, in response to receiving the first CTS frame, the STA transmits data in the ELR format in the TXOP. Optionally, at operation 1650, the STA further receives an acknowledgement in the same format as the first CTS frame for responding to the data being transmitted.

In certain configurations, in response to receiving the first CTS frame, the STA waits for a period. The STA receives a second CTS frame in the period. One of the first CTS frame and the second CTS frame is in the ELR format, and the other of the first CTS frame and the second CTS frame is in the non-ELR format. The data is transmitted after the period.

In certain configurations, in response to not receiving any CTS frame or completely transmitting the data in the ELR format in an estimated transmission period, the STA transmits a single CF-end frame or dual CF-end frames to terminate the TXOP. The single CF-end frame is in the non-ELR format. The dual CF-end frames include a first CF-end frame in the non-ELR format and a second CF-end frame in the ELR format.

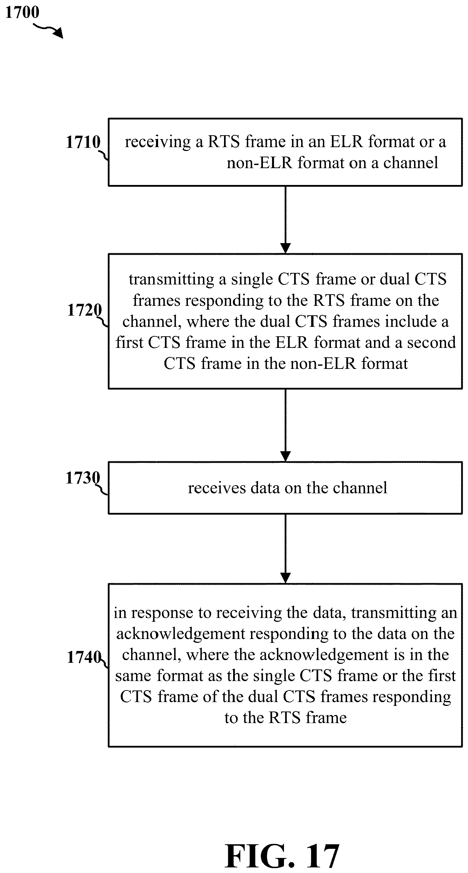

FIG. 17 is a flow chart of a method (process) for wireless communication of a STA. The method may be performed by a STA (e.g., the ELR STA 706, the ELR STA 906, the AP 1102, the ELR STA 1306). At operation 1710, the STA receives a RTS frame in an ELR format or a non-ELR format on a channel. At operation 1720, the STA transmits a single CTS frame or dual CTS frames responding to the RTS frame on the channel. The dual CTS frames include a first CTS frame in the ELR format and a second CTS frame in the non-ELR format. At operation 1730, the STA receives data on the channel. At operation 1740, in response to receiving the data, the STA transmits an acknowledgement responding to the data on the channel. The acknowledgement is in the same format as the single CTS frame or the first CTS frame of the dual CTS frames responding to the RTS frame.

It is understood that the specific order or hierarchy of blocks in the processes / flowcharts disclosed is an illustration of exemplary approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof' include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof' may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. The words "module," "mechanism," "element," "device," and the like may not be a substitute for the word "means." As such, no claim element is to be construed as a means plus function unless the element is expressly recited using the phrase "means for".

## Claims

1. A method of wireless communication of a station, in the following also referred to as STA, comprising:
transmitting a request-to-send, in the following also referred to as RTS, frame in an enhanced long range, in the following also referred to as ELR, format for obtaining a transmission opportunity, in the following also referred to as TXOP, (1620);
receiving a first clear-to-send, in the following also referred to as CTS, frame in the ELR format or a non-ELR format responding to the RTS frame (1630); and
in response to receiving the first CTS frame, transmitting data in the ELR format in the TXOP (1640).

2. The method of claim 1, further comprising:
receiving an acknowledgement in the same format as the first CTS frame for responding to the data being transmitted (1650).

3. The method of claim 1 or 2, further comprising:
prior to transmitting the RTS frame, transmitting a CTS-to-Self frame in the non-ELR format (1610).

4. The method of any one of claims 1 to 3, further comprising:
in response to receiving the first CTS frame, waiting for a period; and
receiving a second CTS frame in the period,
wherein one of the first CTS frame and the second CTS frame is in the ELR format, and the other of the first CTS frame and the second CTS frame is in the non-ELR format,
wherein the data is transmitted after the period.

5. The method of any one of claims 1 to 4, further comprising:
in response to not receiving any CTS frame or completely transmitting the data in the ELR format in an estimated transmission period, transmitting a single CF-end frame or dual CF-end frames to terminate the TXOP.

6. The method of claim 5, wherein the single CF-end frame is in the non-ELR format.

7. The method of claim 5 or 6, wherein the dual CF-end frames include a first CF-end frame in the non-ELR format and a second CF-end frame in the ELR format.

8. The method of any one of claims 1 to 7, wherein the RTS frame and the first CTS frame in the ELR format support single user, in the following also referred to as SU, or multi user, in the following also referred to as MU, orthogonal frequency-division multiple access, in the following also referred to as OFDMA.

9. The method of claim 8, wherein the first CTS frame in the ELR format supporting MU OFDMA also supports CTS separation by non-overlapping resource units, in the following also referred to as RUs, or orthogonally encoded CTS.

10. A method of wireless communication of a station, in the following also referred to as STA, comprising:
receiving a request-to-send, in the following also referred to as RTS, frame in an enhanced long range, in the following also referred to as ELR, format or a non-ELR format on a channel (1710);
transmitting a single clear-to-send, in the following also referred to as CTS, frame or dual CTS frames responding to the RTS frame on the channel, wherein the dual CTS frames include a first CTS frame in the ELR format and a second CTS frame in the non-ELR format (1720);
receiving data on the channel (1730); and
in response to receiving the data, transmitting an acknowledgement responding to the data on the channel, wherein the acknowledgement is in the same format as the single CTS frame or the first CTS frame of the dual CTS frames responding to the RTS frame (1740).

11. The method of claim 10, wherein the single CTS frame is in the ELR format when the RTS frame is in the non-ELR format, and the single CTS frame is in the ELR format or the non-ELR format when the RTS frame is in the ELR format.

12. The method of claim 10 or 11, wherein the CTS frame in the ELR format support single user, in the following also referred to as SU, or multi user, in the following also referred to as MU, orthogonal frequency-division multiple access, in the following also referred to as OFDMA.

13. The method of claim 12, wherein the CTS frame in the ELR format supporting MU OFDMA also supports CTS separation by non-overlapping resource units, in the following also referred to as RUs, or orthogonally encoded CTS.

14. The method of any one of claims 1 to 13, wherein the ELR format is an ELR physical layer protocol data unit, in the following also referred to as PPDU, structure, and the ELR physical layer PPDU structure includes one or more universal signal fields, an ELR short training field, in the following also referred to as STF, an ELR long training field, in the following also referred to as LTF, an ELR signal field, and an ELR data field.

15. An apparatus (1520) for wireless communication, the apparatus (1520) being a station, in the following also referred to as STA, comprising:
a memory (1524); and
at least one processor (1522) coupled to the memory (1524) and configured to perform the steps as defined in any one of the preceding claims.
